# EUROPEAN PATENT APPLICATION

(11) **EP 2 253 929 A1**
(43) Date of publication of application: **24.11.2010**
(21) Application number: 10162394.0
(22) Date of filing: 10.05.2010
(51) Int. Cl.: G01B 11/02, G01B 11/25

(54) **Optoelectronic apparatus for detecting information relating to the shape and to the position of panels having a prevailing flat extension**

(30) Priority: 20.05.2009 IT BO20090327
(71) Applicant: CEFLA SOCIETA' COOPERATIVA, 40026 Imola (BO) (IT)
(72) Inventor: KOEBLER, Philipp, I-48012, BAGNACAVALLO, Province of Raven (IT); GUIDUZZI, Andrea Luca, I-48024, MASSA LOMBARDA, Province of Rav (IT)
(74) Representative: Porsia, Dino

(57) **Abstract**

The apparatus comprises: a pair of conveyor means (T1, T2) positioned one after the other, having a small empty space (S) between them, and moving in the same direction and at the same speed, the laminated board of panels to be machined (B) moving between these means; One or more laser light emitters (5, 105) positioned under said empty space (S) and capable of projecting at least one line of light onto the whole width of the laminated board (B) which passes over this space; a reflective means (4), if required, which is positioned above said empty space (S), and which is struck by the line of light emitted by said laser or lasers (5, 105) when the movement of the laminated board (B) between the two parts in question ceases; at least one suitable mirror (9), which is placed in an offset position under said empty space (S) in order to detect the profile of the line of laser light reflected by the lower surface of the laminated board (B), or from said reflective means (4) if the board is not present, and which reflects and focuses said line of light onto the CCD optical system of at least one video camera (12) positioned above the mirror and under the empty space (S); and processing means (14-19) which detect and process the signals received from said video camera, additionally in relation to a signal correlated with the speed of advance of the laminated board, in order to provide the commands required to control the trimming head which serves to separate the panels from the waste part of the sheet which covers them.

## Description

The invention relates to equipment for applying a covering of PVC sheet or other suitable material to panels, windows or leaves, for furniture or other products, which have a prevailingly flat extension and which are positioned next to each other and in succession with a sufficient distance between them, on a conveyor where they are sprayed with adhesive and then covered with a PVC sheet having, for example, dimensions of approximately 1500 x 3500 mm, the board formed in this way being finally transferred to a press in which, by the application of appropriate pressure and temperature, the PVC sheet is made to adhere closely to the top surfaces and to the outer and inner edges of said panels or windows. In the next step, the laminated board is turned over in such a way that the uncovered surfaces of the panels are made to face upwards and are surrounded by the unused portions of the PVC sheet, and in this condition the laminated board is placed on the conveying surface of a trimming machine having a trimming head which moves, for example, along orthogonal axes, and which must be provided by suitable means with information concerning the shape and position in space of the laminated board, in order to trim the edges of the panels correctly, thus separating them from the waste parts of the PVC sheet which are collected and removed by suitable means. The invention relates to an opto-electronic apparatus, which, while the laminated board of panels is placed on the conveyor of the trimming machine, detects the shape and the position in space of the panels, essentially in two dimensions, namely in the transverse direction with respect to the direction of advance and in the longitudinal direction, by interaction with the system for conveying the laminated board at a known speed.

The technical problem resolved by the invention is that of providing an opto-electronic detection system which is particularly suitable for the aforesaid apparatus, this system being highly reliable, capable of discriminating between the edges of the panels and any portions of waste material, which are located in a very low position and which may touch the composite board conveyor system, avoiding interference with the operations of advancing the laminated boards of panels, and having no visible components, thus being easily and effectively concealed and protected, even in the area of limited height present under said conveyor systems.

The innovative features of an apparatus of this kind are detailed in the attached Claim 1 and in the subsequent dependent claims, and will be made clear by the following description of a preferred embodiment of the apparatus, illustrated purely by way of non-limiting example in the figures on the two attached sheets of drawings, in which:
Fig. 1 is a side elevation of the apparatus concerned;
Fig. 2 is a three-quarters perspective view of the apparatus, taken simultaneously from the panel entry face, from one side and from above;
Fig. 3 is a block diagram of the electrical circuit of the same apparatus.

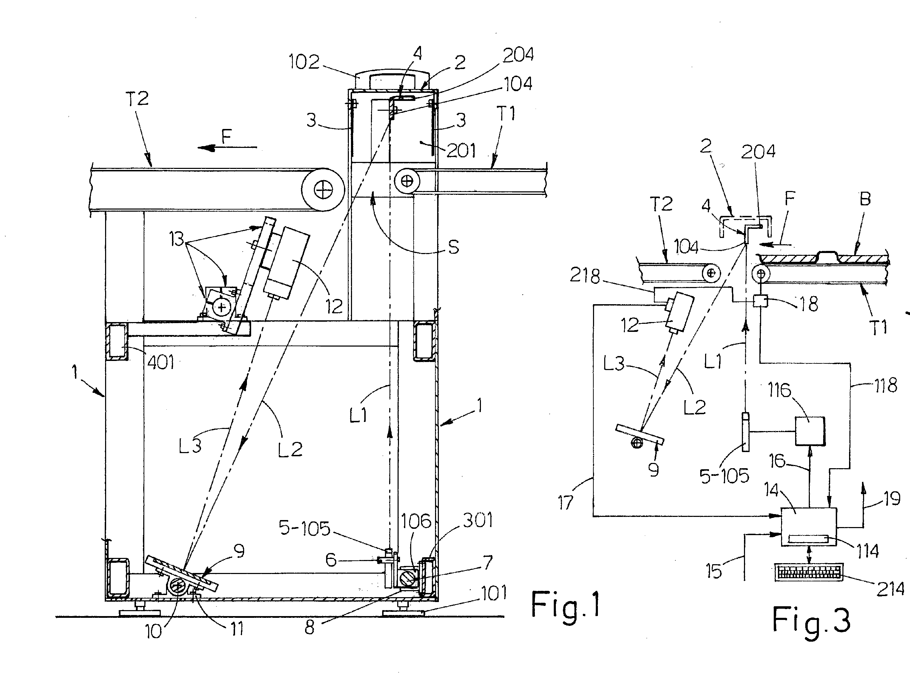

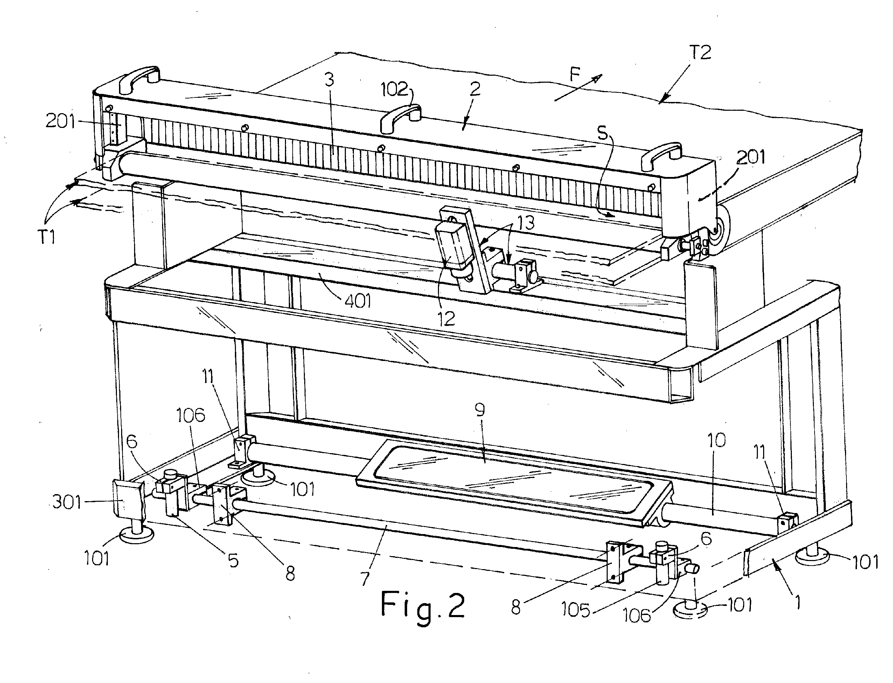

In Figures 1 and 2, T1 indicates the conveyor which transfers the laminated board of panels onto the following coplanar conveyor T2 of the trimming machine, both conveyors therefore moving in the same direction, indicated by the arrow F, and at the same speed. Between the conveyors T1 and T2 there is an empty space S which is sufficiently large to permit the operation of the apparatus in question, and which is such that the laminated board of panels covered with the PVC sheet can be transferred conveniently and correctly from T1 to T2.

Under the empty space S there is a base frame 1 in the shape of a parallelepiped, which for example bears on the ground with adjustable feet 101, can be enclosed below and on its side and front surfaces, extends predominantly below the conveyor T2 and has uprights 201 at its ends at the position of said empty space S, an enclosure 2 being fixed removably to these uprights parallel to the space S, having graspable handles 102 and having, on its sides positioned transversely with respect to the path of the laminated board, downward facing flexible strip curtains 3 which serve to conceal the space inside the portal-like structure 201, 2, since scanning is carried out with laser light within this structure as described below. The enclosure 2 and the buffering panelling of the frame 1 interact with safety microswitches (not shown) which cut off the laser power supply circuit if these concealing components are accidentally removed. Inside the enclosure 2 there is a longitudinally arranged right-angled shaped bar 4 (see below) parallel to the space S, this shaped bar continuing along the whole extension of the space and having an L-shaped profile which in the normal operating condition of the apparatus has its flat-edged side 104 facing downward, and is positioned immediately downstream of the conveyor T1. The flat side 104 of the shaped bar 4 is illuminated by the beams of polarized light rays L1 emitted by a pair of laser emitters 5, 105 located in the lower part of the base frame 1, these emitters facing upwards and being such that they jointly illuminate the whole extension of said side 104. Purely by way of non-limiting example, the laser emitters 5, 105 are mounted in resilient clamps 6 fixed to corresponding orthogonal right-angled clamps 106 fastened to a shaft 7 which is parallel to said shaped bar 4 and which is fixed to a parallel cross-piece 301 of the frame 1, by means of further resilient clamps, the whole arrangement being such that the emitters 5, 105 can be correctly positioned and orientated during installation. Clearly, the number and type of laser emitters may be different from those illustrated, if required.

The flat side 104 of the shaped bar 4 is such that, as indicated by L2, the line of laser light L1 emitted by the components 5, 105, which strikes the whole extension of said side 104, is reflected onto a mirror 9 whose upper surface is slightly concave and whose length is shorter than that of said shaped bar 4, this mirror being positioned in the middle of the lower part of the frame 1 on the side opposite that which is occupied by the laser emitters 5, 105, and therefore in an offset position with respect to the upper aperture S, and being, for example, fastened to a shaft 10 whose ends are supported by resilient clamps 11 fixed to the base frame 1, in such a way that the mirror can also be correctly positioned and orientated.

The mirror 9 can receive the whole line of light L2 arriving from the shaped bar 4 and can reflect it upwards as indicated by L3, focusing it on the CCD optical system of a video camera 12 which is located in the middle of the upper part of the base frame 1 and fastened to a supporting cross-piece 401 with interposed supports 13 for adjustment on a plurality of axes, in such a way that the video camera can also be correctly positioned and orientated during the installation of the apparatus. Because of the presence of the mirror 9, it is possible to position the apparatus according to the invention in the area of limited height available under the conveyors T1, T2, thus increasing the field of view of the video camera 12 without adverse or harmful effects on the viewing.

Filtered air can be introduced by suitable means (not shown) into the inner chamber protected by the frame 1, and can flow out through the upper space S and/or other apertures which may be present, thus preventing the entry into said chamber of dust or other contaminants which may adversely affect the operation of the optical parts of the apparatus. As shown in Figure 3, a programming, processing and computing unit 14 is provided on the apparatus, with software 114 which can be programmed and controlled by external means 214, this unit being provided with a power supply 15, being connected at 16 to the interface 116 controlling the emitters 5, 105, being connected at 17 to the video camera 12, and being connected at 118 to an encoder 18 which receives the information on the speed of advance of the conveyors T1, T2 and which is also connected, as indicated by 218, to the digital video camera 12. The number 19 indicates the output by means of which the unit 14 controls a machining unit, such as the system for moving the head of said trimming machine.

The operation of the equipment as described is simple and evident. The line of light projected by the lasers 5, 105 onto the lower face of the laminated board B, which is composed of projecting parts corresponding to the covered panels and recessed parts corresponding to the waste PVC between one panel and the next, appears on the CCD sensor of the video camera 12 as a two-dimensional profile which is read, by the software of the processing unit 14, as the profile of the real three-dimensional surface which passes in sequence above the lasers. By means of its suitable software 114, the unit 14 can distinguish the edges of the panels from the waste, even if this waste is markedly deformed in a downward direction between one panel and the next. Because of the connection of the system to the encoder 18, the unit 14 can determine the shape and the position on the conveyor T2 of each laminated board of panels cyclically placed on the conveyor, and can therefore issue commands through its output 19 for the correct movement of the trimming head which will separate the edges of the panels from the waste parts of the PVC sheet which covers their lower surfaces and edges. When a new laminated board is placed in position, the first occurrence of a profile in which at least one segment corresponding to a panel is identified will indicate to the system the start of the new laminated board B which will advance on the conveyor T2 up to a predetermined stop position. If no laminated board is present, the illumination reflected from the flat side 104 of the shaped bar 4 can be used to check the correct operation of the system in the idle state. In a preferred embodiment of the invention, the second side 204 of the shaped bar 4 has a sawtooth profile which is orientated downwards for the initial or non-routine calibration of the opto-electronic system, after which the shaped bar 4 is turned over so that its flat side 104 faces downwards, as stated above, in order to produce said line of light which is adjusted, and also in order to ensure that, if the laser and/or video camera should happen to be accidentally displaced during the operation of the apparatus, the apparatus will be capable of detecting this condition and of generating an alarm signal.

## Claims

1. Opto-electronic apparatus for detecting information relating to the shape and position in space of panels or other products having a prevailingly flat extension and transmitting this information to an operating system, the apparatus being particularly adapted for the control of the trimming head of equipment for applying a covering of PVC or other plastic material to panels, windows or leaves for furniture or other products having a prevailingly flat extension, **characterized in that** it comprises:
first and second conveyor means (T1, T2) positioned one after the other, having a small empty space (S) between them, and moving in the same direction and at the same speed, the laminated board of panels to be machined (B) moving on these means;
one or more laser light emitters (5, 105) positioned under said empty space (S) and such that they project at least one line of light onto the whole width or part of the width of the laminated board (B) whose shape and/or position in space is to be detected;
at least one suitable mirror (9), which is placed in an offset position under said empty space (S) in order to detect the variations of profile of the line of laser light reflected by the lower surface of the laminated board (B), and which reflects and focuses said line of light onto the CCD optical system of at least one video camera (12) positioned above the mirror and under the empty space (S);
processing means (14-19) which detect and process the signals received from said video camera, additionally in relation to a signal correlated with the speed of advance of the laminated board, in order to provide the commands required to control the trimming head which serves to separate the panels from the waste part of the sheet which covers them.

2. Apparatus according to Claim 1, in which the laser emitters (5, 105), the reflecting mirror (9) and the CCD video camera (12) are located in a chamber (1) protected from the entry of dust and contaminants, possibly by pressurization of the chamber with clean air.

3. Apparatus according to Claim 1, **characterized in that** it comprises a protective enclosure (2, 102, 3) which is positioned above said empty space (S), and which is struck by the line of light emitted by said laser or lasers (5, 105) when the movement of the laminated board (B) ceases between the two parts in question.

4. Apparatus according to Claim 3, in which a reflective means (4) consisting of a shaped bar having a flat side (104) facing downwards is located inside said protective enclosure (2, 102, 3), means being provided to adjust the line of light reflected by the flat side (104) of said shaped bar (4), and also to ensure that, if the lasers and/or the video camera are accidentally displaced during the operation of the apparatus, the apparatus will be capable of detecting this condition and generating an alarm signal.

5. Apparatus according to Claim 4, in which said reflective means (4) has an L-shaped profile, a second side (204) of the shaped bar having a sawtooth shape and being orientated downwards to interact with the lasers (5, 105) during a step of calibration of the opto-electronic system.

6. Apparatus according to any of the preceding claims, in which all the main components are supported by corresponding support structures with the interposition of means of adjustment on one or more axes, in such a way that each component can be correctly mounted and orientated with respect to the others.

7. Apparatus according to any one of the preceding claims, in which all the parts (1, 2) which enclose the opto-electronic components are provided with safety microswitches which cut off the power supply circuit of the lasers if these parts or their components are accidentally removed.
